# EUROPÄISCHE PATENTSCHRIFT

(11) **EP 2 719 524 B1**
(45) Veröffentlichungstag und Bekanntmachung des Hinweises auf die Patenterteilung: **12.10.2016**
(21) Anmeldenummer: 13180812.3
(22) Anmeldetag: 19.08.2013
(51) Int. Cl.: B29D 30/06, B29C 33/10

(54) **VULKANISIERFORM ZUM VULKANSIEREN VON FAHRZEUGREIFEN**
VULCANISING MOULD FOR VULCANISING VEHICLE TYRES
MOULE POUR LA VULCANISATION DE PNEUS DE VÉHICULES

(30) Priorität: 12.10.2012 DE 102012109723
(43) Veröffentlichungstag der Anmeldung: 16.04.2014
(73) Patentinhaber: Continental Reifen Deutschland GmbH, 30165 Hannover (DE)
(72) Erfinder: Ciptokusumo, Joharsyah, 30165 Hannover (DE); Prochnow, Paula, 30926 Seelze (DE)
(74) Vertreter: Finger, Karsten

(56) Entgegenhaltungen:
- EP-A2- 0 396 060
- EP-A2- 1 232 843
- WO-A1-2006/129642
- DE-A1-102004 028 462
- DE-A1-102009 026 293
- JP-A- H06 106 540
- JP-A- H08 183 037
- US-A- 1 880 430

## Beschreibung

Die Erfindung betrifft eine Vulkanisierform zum Vulkanisieren von Fahrzeugreifen, mit mehreren, zu einer umfangsmäßig geschlossenen Form zusammenfahrbaren Formsegmenten, wobei jedes Formsegment radial innen eine Formfläche mit einem Negativ-Laufstreifenprofil mit Negativ-Profilelementen zur Formung des Positiv-Laufstreifenprofils mit Positiv-Profilelementen des zu vulkanisierenden Fahrzeugreifens aufweist, wobei die Formfläche aus Teil-Formsegmenten zusammengesetzt ist und die Teilung in die Teil-Formsegmente ausschließlich in Umfangsrichtung erfolgt und wobei zwischen zwei benachbart angeordneten Teil-Formsegmenten schmale Entlüftungsspalte ausgebildet sind, welche ein mit der Atmosphäre in Verbindung stehendes Entlüftungsmittel bilden.

Die Reifenvulkanisation erfolgt in Heizpressen, bei der der Reifenrohling in geeignete Vulkanisierformen eingesetzt und unter Einwirkung von Wärme sowie Druck vulkanisiert wird. Vulkanisierformen für Reifen bestehen unter anderem aus Formsegmenten, welche gemeinsam die radial äußere Oberfläche des Reifens, wie den Laufstreifen und den Schulterbereich formen, während weitere Segmente die weiteren Bereiche des Reifens formen. Der unvulkanisierte grüne Reifenrohling wird in der Vulkanisierform heizgepresst und durch Kautschukvernetzungsreaktionen in seinen endgültigen gummielastischen Zustand überführt. Dabei erhält der Reifen seine Profil- und Seitenwandgestaltung durch die entsprechende Negativgestaltung der Formflächen der Formsegmente.

Beispiele für Reifenvulkanisierformen mit Entlüftungsmitteln sind in den Dokumenten JP H06 106540 A, JP H08 183037 A und EP 1 232 843 A2 offenbart.

Wichtig ist bei der Reifenvulkanisation, dass beim Zusammenfahren der Formsegmente die eingeschlossene Luft innerhalb der Formsegmente nicht die Fertigungsqualität von Fahrzeugreifen beeinträchtigt.

Die Formsegmente der Vulkanisierformen für Fahrzeugreifen sind aus Metall gefertigt, üblicherweise aus Stahl oder Aluminium.

Eine weitere Vulkanisierform ist aus der bisher unveröffentlichten DE 10 2009 026 293 bekannt geworden. Die Formflächen der Formsegmente dieser Vulkanisierform sind puzzleartig aus Teil-Formsegmenten mit Teilung in Umfangsrichtung zusammengesetzt. Dabei können die Teil-Formsegmente austauschbar oder aber auch teilweise fest innerhalb des Formsegmentes angeordnet sein. Die Spalte von aneinandergrenzenden Teilformsegmenten sind als Entlüftungsspalte ausgestaltet, welche mit der Atmosphäre in Verbindung stehen. Andere Entlüftungsmittel sind nicht in den Formflächen angeordnet. Durch die umlaufende Teilung der Teil-Formflächen verlaufen die der Entlüftung dienenden Spalten an den Kanten der Teil-Formflächen ebenfalls in umlaufender Richtung. Die Summe der Spaltlängen ist gegenüber herkömmlichen kreisrunden Entlüftungsmitteln erhöht, wodurch die Entlüftung verbessert ist. Es kann mehr Luftvolumen pro Zeiteinheit abgeführt werden und Lufteinschlüsse, welche die Fertigungsqualität des Reifens mindern würden, sind zuverlässig vermieden.

Es hat sich jedoch gezeigt, dass der mit einer vorgenannten Vulkanisierform heizgepresste Reifen im Bereich seiner Schulter deutlich sichtbare Entlüftungspfade entlang der Umfangsrichtung aufweist. Die Entlüftungspfade entstehen, weil beim Ausvulkanisieren des Fahrzeugluftreifens Kautschukmaterial in als Entlüftungsmittel dienenden Spalte gepresst bzw. gesogen werden. Generell sind die Entlüftungspfade entlang der Umfangsrichtung für Sommerreifen erwünscht, da Sie die Reifenperformance bezüglich Aquaplaning positiv beeinflussen. Insbesondere im Teilungs- und Mittenbereich sind Entlüftungspfade entlang der Umfangsrichtung optisch schön zu merken. Im Schulterbereich sind die Entlüftungspfade entlang der Umfangsrichtung im Gegensatz zu Bereichen außerhalb der Schulter optisch besonders kritisch, weil sie die quer zur Umfangsrichtung ausgelegten Stege durchqueren. Sie erzeugen somit negative optische Effekte. Die im Schulterbereich unerwünschten Entlüftungspfade quer zu den Stegen bleiben auf dem fertigen Fahrzeugluftreifen erhalten.

Der Erfindung liegt daher die Aufgabe zugrunde, eine kostengünstige Vulkanisierform mit Entlüftungsmitteln zu schaffen, die wenig verschmutzungsanfällig ist und mit denen der Fahrzeugreifen mit nur geringem Gummiaustrieb vulkanisierbar ist und somit eine hervorragende Fertigungsqualität aufweist.

Gelöst wird die Aufgabe durch die Merkmale des Anspruchs 1 wobei innerhalb der Negativ-Profilelemente derjenigen Teil-Formsegmente, welche die Reifenschultern formen, Entlüftungsschlitze angeordnet sind und wobei im Bereich der Teil-Formsegmente, welche die Reifenschultern formen, auf die Entlüftungsspalte verzichtet ist.

Somit sind die Entlüftungsschlitze die einzigen Entlüftungsmittel in der Formfläche im Bereich der Teil-Formsegmente der Schulterbereiche. Die Entlüftungsspalte sind die einzigen Entlüftungsmittel in der Formfläche im Bereich der Teil-Formsegmente außerhalb des Schulterbereiches. Die Entlüftungsschlitze im Schulterbereich sind innerhalb des Negativ-Profilelementes angeordnet. Hierdurch ist erreicht, dass im für die Entlüftung kritischen Schulterbereich der Vulkanisierform keine bzw. kaum Austriebe entstehen.

Vorteilhaft ist es, wenn je ein Teilformsegment je eine Reifenschulter formt. Die Reifenschulter besteht aus einem einzigen Teilformsegment, in dem nur Entlüftungsschlitze als Entlüftungsmittel angeordnet sind.

Vorteilhaft ist es, wenn der Entlüftungsschlitz eine Breite von 25 µm bis 70 µm, vorzugsweise von 30 µm bis 60 µm aufweist. Die Breite des Entlüftungsschlitzes bemisst sich senkrecht zu seiner Längserstreckung. Die vorgenannte Breite gewährt eine ausreichende Entlüftung, jedoch wird das Eindringen von Kautschukmaterial des Reifens in den Entlüftungsschlitz vermieden, so dass am heizgepressten Reifen keine bzw. kaum Austriebe entstehen. Zudem verschmutzt oder verstopft der Entlüftungsschlitz nicht bzw. kaum.

Zweckmäßig ist es, wenn der Entlüftungsschlitz eine Länge von 10 mm bis 40 mm aufweist, damit das neue Entlüftungskonzept flexibel konstruiert werden kann. Der Entlüftungsschlitz kann dabei unterschiedliche Gestalt aufnehmen.

Um eine gute Entlüftung zu gewährleisten ist es vorteilhaft, wenn der Entlüftungsschlitz benachbart und parallel zu Stegen, welche Nuten im Profilpositiv des Reifens formen, angeordnet ist, wobei die Stege vorzugsweise derart angeordnet sind, dass sie Querrillen im Profilpositiv formen. "Benachbart" meint einen Abstand zwischen 0,5 mm und 2 mm des Entlüftungsschlitzes zu dem nächstgelegenen Steg, gemessen senkrecht auf diesen Steg. Somit kann die Luft aus den Zwischenräumen zwischen Stegen gut abgeführt werden.

Vorteilhaft ist es, wenn der Entlüftungsschlitz in Richtung radial außen (zur Außenseite der Vulkanisierform hin) in einen Entlüftungskanal mündet, dessen Querschnittsfläche größer als die Querschnittsfläche des Entlüftungsschlitzes ist und dessen Querschnitt vorzugsweise rund ist. Hierdurch kann bei einer anstehenden Reinigung der Vulkanisierform der Entlüftungsspalt leicht von der Außenseite her ausgeblasen werden, wobei ein bestehender Gummirest als Pfropfen rückstandsfrei ausgetrieben werden kann.

Zweckmäßig ist es, wenn der Entlüftungsschlitz über seine Längserstreckung, vorzugsweise über seine Längserstreckung und über seine Tiefenerstreckung, die gleiche Breite aufweist, damit unterschiedliche Schlitzanordnungen auf der Formoberfläche ermöglicht werden können (um den angemessenen Entlüftungsumfang zu erfüllen) und eine Entlüftungsbohrung von der Hinterseite der Form gezielt angesetzt werden kann.

In einer bestimmten Ausführungsform enden die beiden Enden eines Entlüftungsschlitzes innerhalb des Negativ-Profilelementes.

In einer der vorgenannten Ausführungsform alternativen Ausführung enden die beiden Enden eines Entlüftungsschlitzes außerhalb des Negativ-Profilelementes in den das Negativ-Profilelement begrenzenden Negativ-Rillen.

Zweckmäßig ist es, wenn der Entlüftungsschlitz eine Tiefenerstreckung von 3 mm bis 5 mm aufweist. Ebenso zweckmäßig ist es, wenn der Entlüftungskanal eine Tiefenerstreckung von 10 mm bis 15 mm aufweist. Somit entspricht das Entlüftungskonzept der durchschnittlichen geometrischen Anforderung eines Formsegments bezüglich der Dicke.

Zweckmäßig ist es, wenn der Entlüftungsschlitz eine Tiefenerstreckung von 3 mm bis 5 mm aufweist. Ebenso zweckmäßig ist es, wenn der Entlüftungskanal eine Tiefenerstreckung von 10 mm bis 15 mm aufweist. Somit entspricht das Entlüftungskonzept der durchschnittlichen geometrischen Anforderung eines Formsegments bezüglich der Dicke.

Die Erfindung betrifft ebenfalls einen Fahrzeugreifen, welcher mit einer Vulkanisierform gemäß einer oder mehrerer der vorgenannten Ausführungen vulkanisiert worden ist.

Weitere Vorteile, Merkmale und Einzelheiten der Erfindung sind in den Figuren, welche Ausführungsbeispiele darstellen, näher erläutert. Es zeigen die:
- Fig. 1: eine segmentierte Vulkanisierform mit Formsegmenten;
- Fig. 2: eine Aufsicht auf die Formfläche eines Formsegmentes;
- Fig. 3: einen Querschnitt eines Entlüftungsschlitzes samt Entlüftungskanal entlang des Schnittes A-A der Fig. 2;
- Fig. 4: einen Längsschnitt des Entlüftungsschlitzes samt Entlüftungskanal der Fig. 3 entlang des Schnittes B-B der Fig. 2;
- Fig. 5: einen Längsschnitt eines anderen Entlüftungsschlitzes samt Entlüftungskanales.

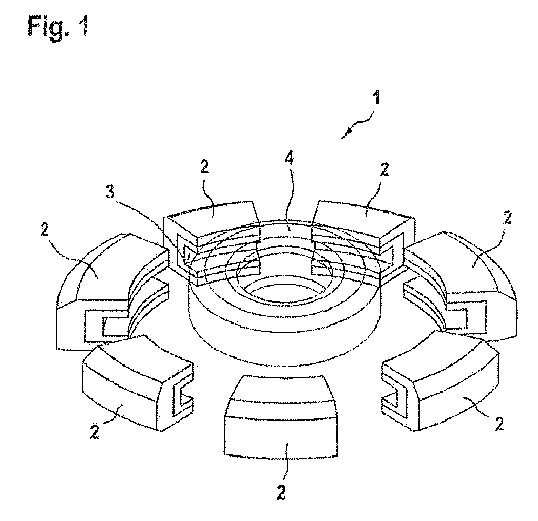

In der **Fig.1** ist eine vereinfachte schematische Darstellung einer segmentierten Vulkanisierform 1 für Fahrzeugreifen 4 mit mehreren, zu einer umfangsmäßig geschlossenen Form zusammenfügbaren Formsegmenten 2 dargestellt. Die Formsegmente 2 sind radial verfahrbar und bilden radial innen einen Formenhohlraum. Die Formsegmente 2 weisen innenseitig Formflächen 3 auf. Die Formsegmente 2 weisen weiterhin Entlüftungsmittel 5 (nicht dargestellt) auf, welche mit der Atmosphäre in Verbindung stehen und durch welche Gas aus dem Formenhohlraum der Vulkanisierform 1 durch das Formsegment 2 hindurch nach außen ausleitbar ist.

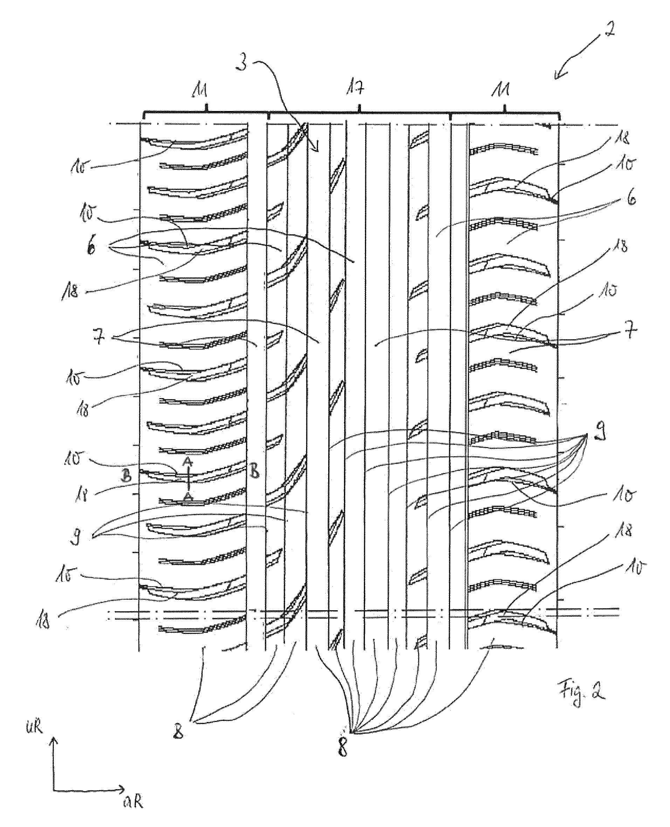

Die **Fig. 2** zeigt eine Aufsicht auf die Formfläche 3 eines Formsegmentes 2. Die Formfläche 3 weist ein Negativ-Laufstreifenprofil mit Negativ-Profilelementen 6 zur Formung des Positiv-Laufstreifenprofils mit Positiv-Profilelementen des zu vulkanisierenden Fahrzeugreifens auf. Die Negativ-Rillen 7 bilden in der Formfläche 2 des Formsegmentes Stege.

Die Formfläche 2 ist aus Teil-Formsegmenten 8 zusammengesetzt. Die Teilung in diese Teil-Formsegmente 8 erfolgt ausschließlich in Umfangsrichtung uR. Zwischen zwei benachbart angeordneten Teil-Formsegmenten 8 sind schmale Entlüftungsspalte 9 angeordnet, welche ein mit der Atmosphäre in Verbindung stehendes Entlüftungsmittel bilden. Es sind zehn Entlüftungsspalte 9 angeordnet. Diese Entlüftungsspalte 9 sind jedoch nur außerhalb des Schulterbereiches 11 der Formfläche 2 in der Laufstreifenmitte 17 angeordnet. Im Schulterbereich 11 der Formfläche 2 sind Entlüftungsschlitze 10 innerhalb der Negativ-Profilelemente 6 anstatt der umlaufenden, zwischen zwei Teil-Formsegmenten 8 angeordneten Entlüftungsspalte 9 angeordnet. Auf sonstige Entlüftungsmittel wie beispielsweise Eurovents oder zylindrische Entlüftungsbohrungen ist verzichtet. Die Entlüftungsschlitze 10 sind benachbart, hier mit einem Abstand von 1 mm und parallel zu den Stegen 18, welche Einschnitte im Profilpositiv des Reifens formen, angeordnet. Die Oberfläche der Entlüftungsschlitze 10 eines Negativ-Profilelementes 6 beträgt etwa 5-15 % der Oberfläche des Negativ-Profilelementes 6.

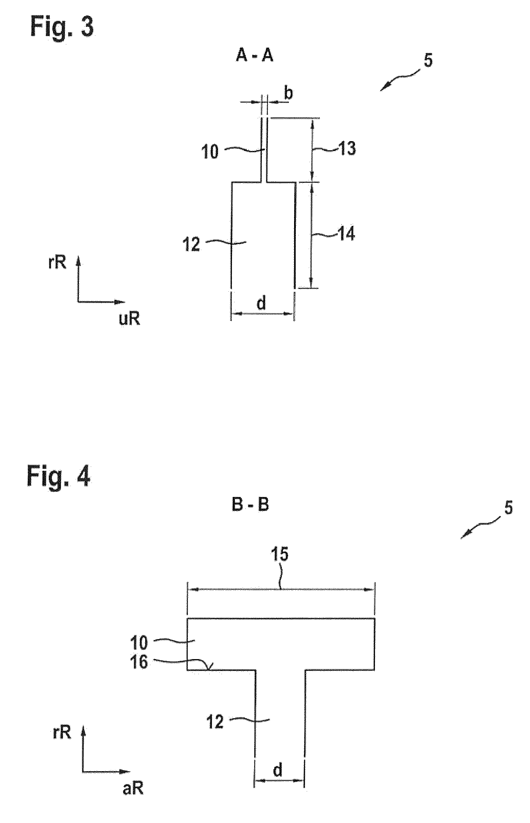

Die **Fig. 3** zeigt einen Querschnitt eines Entlüftungsschlitzes 10 samt Entlüftungskanal 12 entlang des Schnittes B - B der Fig. 2, während die **Fig. 4** den entsprechenden Längsschnitt zeigt. Der Entlüftungsschlitz 10 weist eine Breite b von 25 µm bis 70 µm, vorzugsweise von 30 µm bis 60 µm auf. Der Entlüftungsschlitz 10 mündet in den Entlüftungskanal 12, dessen Querschnittsfläche rund ist und größer als die Querschnittsfläche des Entlüftungsschlitzes ist. Der Durchmesser d des Entlüftungskanales 12 beträgt zwischen 2 mm und 3 mm.

Der Entlüftungsschlitz 10 weist eine radiale Tiefenerstreckung 13 von 3 mm bis 5 mm und der Entlüftungskanal 12 weist eine radiale Tiefenerstreckung 14 von 10 mm bis 15 mm auf. Über die Längserstreckung 15 des Entlüftungsschlitzes 10 und über seine Tiefenerstreckung 14 bleibt die Breite b gleich. Die Längserstreckung 15 beträgt zwischen 10 mm und 40 mm.

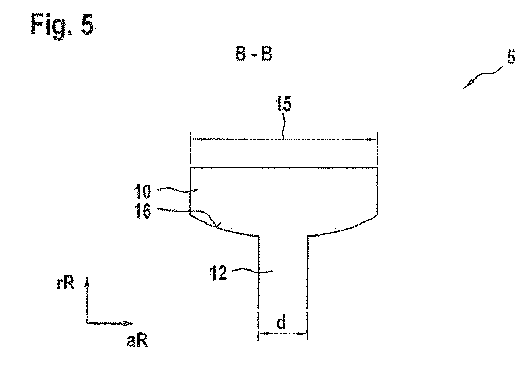

Die **Fig. 5** zeigt einen Längsschnitt eines anderen Entlüftungsschlitzes 10 samt Entlüftungskanales 12. Der Längsschnitt dieses Entlüftungsmittels 5 unterscheidet sich von dem der Fig. 4 darin, dass die untere Fläche des Entlüftungsschlitzes 16 trichterförmig in den Entlüftungskanal 12 übergeht, während die untere Fläche des Entlüftungsschlitzes 16 der Fig. 4 in axialer Richtung aR verlaufend ausgebildet ist.

### Bezugszeichenliste

### (Teil der Beschreibung)

- 1: Vulkanisierform
- 2: Formsegment
- 3: Formfläche
- 4: Fahrzeugreifen
- 5: Entlüftungsmittel
- 6: Negativ-Profilelement
- 7: Negativ-Rille
- 8: Teil-Formsegment
- 9: Entlüftungsspalt
- 10: Entlüftungsschlitz
- 11: Schulterbereich
- 12: Entlüftungskanal
- 13: Tiefenerstreckung Entlüftungsschlitz
- 14: Tiefenerstreckung Entlüftungskanal
- 15: Längserstreckung Entlüftungsschlitz
- 16: Untere Fläche des Entlüftungsschlitzes
- 17: Laufstreifenmitte
- 18: Steg

- b: Breite Entlüftungsschlitz
- d: Durchmesser Entlüftungskanal

- rR: radiale Richtung
- aR: axiale Richtung
- uR: Umfangsrichtung

## Patentansprüche

1. Vulkanisierform (1) zum Vulkanisieren von Fahrzeugreifen,
mit mehreren, zu einer umfangsmäßig geschlossenen Form zusammenfahrbaren Formsegmenten (2), wobei jedes Formsegment (2) radial innen (ri) eine Formfläche (3) mit einem Negativ-Laufstreifenprofil mit Negativ-Profilelementen (6) zur Formung des Positiv-Laufstreifenprofils mit Positiv-Profilelementen des zu vulkanisierenden Fahrzeugreifens aufweist, wobei die Formfläche (3) aus Teil-Formsegmenten (8) zusammengesetzt ist und die Teilung in die Teil-Formsegmente (8) ausschließlich in Umfangsrichtung (uR) erfolgt und wobei zwischen zwei benachbart angeordneten Teil-Formsegmenten (8) schmale Entlüftungsspalte (9) ausgebildet sind, welche ein mit der Atmosphäre in Verbindung stehendes Entlüftungsmittel (5) bilden,
wobei innerhalb der Negativ-Profilelemente (6) derjenigen Teil-Formsegmente (8), welche die Reifenschultern formen, Entlüftungsschlitze (10) angeordnet sind und
wobei im Bereich der Teil-Formsegmente (8), welche die Reifenschultern formen, auf die Entlüftungsspalte (9) verzichtet ist.

2. Vulkanisierform nach Anspruch 1,
**dadurch gekennzeichnet, dass** die Entlüftungsschlitze (10) und die Entlüftungsspalte (9) die einzigen Entlüftungsmittel (5) innerhalb der Formfläche (3) sind.

3. Vulkanisierform (1) nach einem oder mehreren der vorangehenden Ansprüche, **dadurch gekennzeichnet, dass** je ein Teilformsegment je eine Reifenschulter formt.

4. Vulkanisierform (1) nach einem oder mehreren der vorangehenden Ansprüche, **dadurch gekennzeichnet, dass** der Entlüftungsschlitz (10) eine Breite von 25 µm bis 70 µm, vorzugsweise von 30 µm bis 60 µm aufweist.

5. Vulkanisierform (1) nach einem oder mehreren der vorangehenden Ansprüche, **dadurch gekennzeichnet, dass** der Entlüftungsschlitz (10) eine Länge von 10 mm bis 40 mm aufweist.

6. Vulkanisierform (1) nach einem oder mehreren der vorangehenden Ansprüche, **dadurch gekennzeichnet, dass** der Entlüftungsschlitz (10) unmittelbar benachbart und parallel zu Stegen (8), welche Nuten im Profilpositiv des Reifens formen, angeordnet ist, wobei die Stege vorzugsweise derart angeordnet sind, dass sie Querrillen im Profilpositiv formen.

7. Vulkanisierform (1) nach einem oder mehreren der vorangehenden Ansprüche, **dadurch gekennzeichnet, dass** der Entlüftungsschlitz (10) in einen Entlüftungskanal (12) mündet, dessen Querschnittsfläche größer als die Querschnittsfläche des Entlüftungsschlitzes ist und dessen Durchmesser (d) 2 mm bis 3 mm beträgt.

8. Vulkanisierform (1) nach einem oder mehreren der vorangehenden Ansprüche, **dadurch gekennzeichnet, dass** der Entlüftungsschlitz (10) über seine Längserstreckung (15), vorzugsweise über seine Längserstreckung (15) und über seine Tiefenerstreckung (13), die gleiche Breite (b) aufweist.

9. Vulkanisierform (1) nach einem oder mehreren der vorangehenden Ansprüche, **dadurch gekennzeichnet, dass** die beiden Enden eines Entlüfungsschlitzes (10) innerhalb des Negativ-Profilelementes (6) enden.

## Claims

1. Vulcanizing mould (1) for vulcanizing vehicle tyres, with multiple mould segments (2), which can be moved together to form a circumferentially closed mould, wherein each mould segment (2) has radially inwardly (ri) a mould surface (3) with a negative tread profile comprising negative profile elements (6) for the forming of the positive tread profile comprising positive profile elements of the vehicle tyre to be vulcanized, wherein the mould surface (3) is made up of partial mould segments (8) and the division into the partial mould segments (8) takes place exclusively in the circumferential direction (uR) and wherein between two adjacently arranged partial mould segments (8) there are formed narrow venting gaps (9), which form a venting means (5) that is in connection with the atmosphere, wherein venting slits (10) are arranged within the negative profile elements (6) of those partial mould segments (8) that form the tyre shoulders and wherein no venting gaps (9) are provided in the region of the partial mould segments (8) that form the tyre shoulders.

2. Vulcanizing mould according to Claim 1, **characterized in that** the venting slits (10) and the venting gaps (9) are the only venting means (5) within the mould surface (3).

3. Vulcanizing mould (1) according to one or more of the preceding claims, **characterized in that** each partial mould segment forms a tyre shoulder.

4. Vulcanizing mould (1) according to one or more of the preceding claims, **characterized in that** the venting slit (10) has a width of 25 *µ*m to 70 *µ*m, preferably of 30 *µ*m to 60 *µ*m.

5. Vulcanizing mould (1) according to one or more of the preceding claims, **characterized in that** the venting slit (10) has a length of 10 mm to 40 mm.

6. Vulcanizing mould (1) according to one or more of the preceding claims, **characterized in that** the venting slit (10) is arranged directly adjacent and parallel to webs (8), which form grooves in the profile positive of the tyre, the webs preferably being arranged in such a way that they form transverse grooves in the profile positive.

7. Vulcanizing mould (1) according to one or more of the preceding claims, **characterized in that** the venting slit (10) opens out into a venting channel (12), the cross-sectional area of which is greater than the cross-sectional area of the venting slit and the diameter (d) of which is 2 mm to 3 mm.

8. Vulcanizing mould (1) according to one or more of the preceding claims, **characterized in that** the venting slit (10) has the same width (b) over its longitudinal extent (15), preferably over its longitudinal extent (15) and over its depth extent (13).

9. Vulcanizing mould (1) according to one or more of the preceding claims, **characterized in that** the two ends of a venting slit (10) end within the negative profile element (6).

## Revendications

1. Moule de vulcanisation (1) pour vulcaniser des pneus de véhicules, comprenant une pluralité de segments de moule (2) pouvant être rapprochés les uns des autres pour former un moule fermé sur la périphérie, chaque segment de moule (2) présentant radialement à l'intérieur (ri) une surface de moule (3) avec un profil de bande de roulement négatif avec des éléments profilés négatifs (6) pour former le profil de bande de roulement positif avec des éléments de profil positifs du pneu de véhicule à vulcaniser, la surface de moule (3) étant constituée de segments de moule partiels (8) et la division en les segments de moule partiels (8) s'effectuant exclusivement dans la direction périphérique (uR) et d'étroits interstices de ventilation (9) étant réalisés entre deux segments de moule partiels adjacents (8) lesquels interstices de ventilation forment un moyen de ventilation (5) en liaison avec l'atmosphère, des fentes de ventilation (10) étant disposées à l'intérieur des éléments profilés négatifs (6) des segments de moule partiels (8) qui forment les épaulements du pneu et les interstices de ventilation (9) étant omis dans la région des segments de moule partiels (8) qui forment les épaulements du pneu.

2. Moule de vulcanisation selon la revendication 1, **caractérisé en ce que** les fentes de ventilation (10) et les interstices de ventilation (9) sont les seuls moyens de ventilation (5) à l'intérieur de la surface de moule (3).

3. Moule de vulcanisation (1) selon l'une quelconque ou plusieurs des revendications précédentes, **caractérisé en ce qu'**un segment de moule partiel forme à chaque fois un épaulement de pneu respectif.

4. Moule de vulcanisation (1) selon l'une quelconque ou plusieurs des revendications précédentes, **caractérisé en ce que** la fente de ventilation (10) présente une largeur de 25 *µ*m à 70 *µ*m, de préférence de 30 *µ*m à 60 *µ*m.

5. Moule de vulcanisation (1) selon l'une quelconque ou plusieurs des revendications précédentes, **caractérisé en ce que** la fente de ventilation (10) présente une longueur de 10 mm à 40 mm.

6. Moule de vulcanisation (1) selon l'une quelconque ou plusieurs des revendications précédentes, **caractérisé en ce que** la fente de ventilation (10) est disposée en position immédiatement adjacente et parallèle à des nervures (8) qui forment des rainures dans le profil positif du pneu, les nervures étant disposées de préférence de telle sorte qu'elles forment des gorges transversales dans le profil positif.

7. Moule de vulcanisation (1) selon l'une quelconque ou plusieurs des revendications précédentes, **caractérisé en ce que** la fente de ventilation (10) débouche dans un canal de ventilation (12) dont la surface en section transversale est supérieure à la surface en section transversale de la fente de ventilation et dont le diamètre (d) est de 2 mm à 3 mm.

8. Moule de vulcanisation (1) selon l'une quelconque ou plusieurs des revendications précédentes, **caractérisé en ce que** la fente de ventilation (10) présente la même largeur (b) sur son étendue longitudinale (15), de préférence sur son étendue longitudinale (15) et sur son étendue en profondeur (13).

9. Moule de vulcanisation (1) selon l'une quelconque ou plusieurs des revendications précédentes, **caractérisé en ce que** les deux extrémités d'une fente de ventilation (10) se terminent à l'intérieur de l'élément profilé négatif (6).
